# EUROPÄISCHE PATENTSCHRIFT

(11) **EP 1 919 197 B1**
(45) Veröffentlichungstag und Bekanntmachung des Hinweises auf die Patenterteilung: **09.04.2014**
(21) Anmeldenummer: 07018873.5
(22) Anmeldetag: 26.09.2007
(51) Int. Cl.: H04N 5/232

(54) **Steuerung für eine elektronische Zeilenkamera**
Controller for an electronic line scan camera
Commande pour caméra linéaire électronique

(30) Priorität: 01.11.2006 DE 102006051950
(43) Veröffentlichungstag der Anmeldung: 07.05.2008
(73) Patentinhaber: Basler Aktiengesellschaft, 22926 Ahrensburg (DE)
(72) Erfinder: Kunze, Jörg, Dr., 22926 Ahrensburg (DE)
(74) Vertreter: Jaeschke, Rainer

(56) Entgegenhaltungen:
- DE-A1- 10 314 244
- DE-A1-102004 050 422
- DE-A1-102005 010 552
- DE-B3-102004 014 532
- US-A1- 2003 222 987

## Beschreibung

Die Erfindung betrifft ein Verfahren zum Steuern einer elektronischen Zeilenkamera, die wenigstens zwei Zeilen mit lichtempfindlichen Pixeln aufweist, mittels externer Triggersignale.

Es ist bekannt, laufende Produktionsprozesse oder sich bewegende Objekte mittels Zeilenkameras optisch abzutasten. Dabei bewegen sich die Kamera und das Objekt relativ zueinander, wobei die Bewegung senkrecht zu den Sensorzeilen erfolgt. In der Regel wird dabei so vorgegangen, dass in Abhängigkeit von der Bewegung des Objekts ein Triggersignal erzeugt wird, aufgrund dessen ein Auslösen der elektronischen Kamera zu bestimmten Abschnitten oder bestimmten Zeiten des Objektes erfolgt. Es wird jeweils ein zeilenförmiges Bild erzeugt. Durch das aufeinanderfolgende zeilenförmige Abtasten und die Aneinanderreihung mehrerer aufeinander folgender Bildzeilen kann das gesamte Objekt abgetastet und abgebildet werden.

Bei Zeilenkameras mit nur einer Zeile löst ein Triggersignal eine Belichtung der gesamten Zeile aus, und anschließend werden die Bildinformationen ausgegeben. Die Steuerung einer derartigen Zeilenkamera bereitet grundsätzlich keine Probleme. Jeder Zeile ist einem bestimmten zeilenförmigen Bereich auf dem abzutastenden Objekt zugeordnet. Die Steuerung erfolgt derart, dass die Bildzeilen in einem gleichen räumlichen Abstand abgetastet werden. Dadurch wird die Ortsauflösung von der Relativgeschwindigkeit zwischen Objekt und Kamera unabhängig. Die Funktion des Triggers besteht in der korrekten Abstimmung der Kamera auf die Relativbewegung zwischen Kamera und Objekt. Es muss gewährleistet sein, dass die Kamera zu jedem Triggersignal ein Bild aufnimmt. Andernfalls kann es zu Verzerrungen kommen. Bei optimaler Abstimmung kann zeilenweise ein isotrop aufgelöstes Gesamtbild zusammengesetzt werden.

Bei Zeilenkameras kommen mitunter auch Mehrzeilensensoren zum Einsatz. Diese weisen eine vorbestimmte Anzahl von Sensorzeilen auf. Hier erfolgt nach einem externen Triggersignal die gleichzeitige Belichtung aller Zeilen. Es wird in der Regel eine breiterer Bildbereich erfasst als bei einem einzeiligen Bildsensor. Bei gleicher Ortsauflösung wäre es dann erforderlich, weiter beabstandete Triggersignale zu erzeugen. Da die Triggersignale jedoch objektseitig extern zur Kamera erzeugt werden, ist ein beliebiger Einsatz derartiger elektronischer Kameras nicht immer ohne weiteres möglich.

Es ist aus der US 2003/0222987 A1 bekannt, ein Objekt nacheinander durch mehrere Zeilen eines lichtempfindlichen Sensors aufzunehmen. Die aufgenommenen verschiedenen Bilder der einzelnen Zeilen werden synchronisiert und übereinander gelegt, um den mehrfach aufgenommenen Objektpunkt in nur einem Bildpunkt wiederzugeben. Es ist nicht vorgesehen, eine Mehrzeilenkamera wie eine Einzeilenkamera ansteuern zu können. Die DE 103 14 244 A1 beschreibt eine Inspektionsvorrichtung für Endlosmaterialien, bei der das Material durch nur einen Zeilensensor aufgenommen wird. Die erzeugten Daten werden abwechselnd zwei Auswerteeinheiten zugeführt, wodurch eine kontinuierliche Erfassung und Auswertung möglich sein soll.

Der Erfindung liegt daher die Aufgabe zugrunde, eine Steuerung für eine elektronische Mehrzeilenkamera so auszubilden, dass eine Triggerung wie bei einer Zeilenkamera mit einem einzeiligen Sensor möglich ist.

Die Aufgabe wird gemäß der Erfindung dadurch gelöst, dass aufgrund eines ersten externen Triggersignals eine vorbestimmte Anzahl von Zeilen belichtet und die Bildinformationen der ersten belichteten Zeile ausgegeben werden, und dass jeweils aufgrund eines nachfolgenden externen Triggersignals die Bildinformationen jeweils einer nachfolgenden Zeile ausgegeben werden, wobei die nachfolgenden externen Triggersignale gezählt werden und ein externes Triggersignal als ein die Belichtung der Zeilen auslösendes erstes Triggersignal gesetzt wird, wenn die Anzahl der gezählten externen Triggersignale der Anzahl der aufgrund des vorhergegangenen ersten Triggersignals belichteten Zeilen entspricht. Unter einer belichteten Zeile soll hier eine Zeile verstanden werden, die zur Belichtung vorgesehen ist und deren Bildinformationen nach der Belichtung ausgelesen oder ausgegeben werden. Dann verhält sich die Mehrzeilenkamera wie eine Einzeilenkamera, da zu jedem nachfolgenden externen Triggersignal die Bildinformationen einer Zeile ausgegeben werden, die auch einem nachfolgend aufgenommen zeilenförmigen Bereich des Objekts entsprechen.

Es kann auch vorgesehen werden, dass die externen Triggersignale gezählt werden und ein externes Triggersignal als ein die Belichtung der Zeilen auslösendes erstes Triggersignal dann gesetzt wird, wenn die Anzahl der gezählten externen Triggersignale der Anzahl der belichteten Zeilen entspricht. Damit wird erreicht, dass die gesamten Bildinformationen einer Aufnahme ausgegeben werden und erst anschließend eine erneute Belichtung der Zeilen aufgrund des nachfolgenden ersten Triggersignals erfolgt.

Die nachfolgenden Triggersignale bewirken lediglich eine Ausgabe der Informationen der nachfolgenden Bildzeilen des Sensors oder der Kamera, die aufgrund des ersten Triggersignals belichtet worden sind. Demnach wird beispielsweise bei einer zweizeiligen Kamera jedes zweite externe Triggersignal und bei einer vierzeiligen Kamera jedes vierte externe Triggersignal als erstes Triggersignal gesetzt. Lediglich das durch die Steuerung gesetzte erste Triggersignal bewirkt eine Belichtung aller zu belichtenden Zeilen der Kamera. Die dazwischen liegenden externen Triggersignale bewirken eine Ausgabe der Bildinformationen der betreffenden Bildzeilen der Kamera. Durch eine solche Steuerung wird erreicht, dass aufgrund jedes externen Triggersignals die Bildinformationen nur einer Zeile ausgegeben werden, obwohl mehrere Zeilen der Kamera belichtet worden sind. Damit ist es möglich, eine elektronische Kamera mit mehreren Zeilen in gleicher Weise anzusteuern wie eine einzeilige Kamera. Dadurch wird ein Einbau einer solchen Kamera, beispielsweise als Ersatz für eine defekte Kamera, wesentlich erleichtert.

Ein besonderer Vorteil der Erfindung ist darin zu sehen, dass eine derart gesteuerte Kamera mit mehreren Zeilen wesentlich schneller als eine einzeilige Kamera arbeitet. Bei einer Einzeilenkamera erfolgen nach jeder Belichtung ein Auslesen und anschließend die Ausgabe der Bildinformationen. Gemäß der Erfindung ist vorgesehen, dass nach einer Belichtung ein Auslesen aller belichteten Zeilen erfolgt. Die Bildinformationen der einzelnen Zeilen werden oder bleiben, je nach Sensorbauart, gespeichert, bis sie zeilenweise abgerufen und ausgegeben werden. Dies kann entweder aufgrund eines nachfolgenden Triggersignals oder selbsttätig aufeinanderfolgend geschehen. Der Auslesevorgang ist häufig der limitierende Zeitfaktor bei Einzeilenkameras. Da das Auslesen der Zeilen bei Mehrzeilenkameras zeitlich parallel erfolgen kann, liegen die Bildinformationen mehrerer aufeinanderfolgender Zeilen nach nur einem Auslesevorgang vor. Die Ausgabe kann entsprechend schneller erfolgen. Es ist dabei möglich, die Belichtung bereits dann zu starten, wenn der Auslese- oder Ausgabevorgang noch läuft.

Es ist zweckmäßig, wenn eine erneute Belichtung der Zeilen des Sensors nach einer Anzahl von Triggersignalen erfolgt, die der Anzahl der nach dem vorhergehenden ersten Triggersignal belichteten Zeilen entspricht. Auch ist es zweckmäßig, wenn die Bildinformationen einer belichteten Zeile zur Ausgabe aufgrund des der Zeile zugeordneten Triggersignals gespeichert werden oder bleiben. Dann verhält sich die mehrzeilige Zeilenkamera anwenderseitig wie eine einzeilige Kamera.

Durch die erfindungsgemäße Steuerung wird erreicht, dass aufgrund jedes externen Triggersignals die Bildinformationen einer Zeile ausgegeben werden. Die Besonderheit besteht darin, dass bei einer n-zeiligen Kamera nur jedes n-te externe Triggersignal zu einer Belichtung der lichtempfindlichen Zeilen führt. Die dazwischen liegenden externen Triggersignale dienen insbesondere zum Abrufen der Bildinformationen der vorher bereits belichteten und den betreffenden Triggersignalen zugeordneten Zeilen. Mit der erfindungsgemäßen Steuerung können Mehrzeilenkameras so gesteuert werden, dass diese sich anwenderseitig wie einzeilige Zeilenkameras verhalten. Die Anzahl der belichteten Zeilen, deren Bildinformationen abgerufen werden, kann der Anzahl der Zeilen des Sensors entsprechen oder kleiner sein. Es ist zudem möglich, die Bildaufnahmefrequenz zu erhöhen, da die Bildinformationen schneller zur Verfügung stehen.

Mit dieser Steuerung ist es demnach möglich, Mehrzeilenkamera anstelle von Einzeilenkamera einzusetzen. Da die Ansteuerung der Kamera in gleicher Weise wie bei einer Einzeilenkamera erfolgt, brauchen keine andersartigen oder besonders angepassten Triggersignale erzeugt zu werden. Die objektseitig oder anwenderseitig erzeugten externen Triggersignale. die nicht als erste Triggersignale gesetzt werden, können zur zeilenweisen Ausgabe der Bildinformationen verwendet oder verworfen werden. Nachdem alle Zeilen ausgelesen sind, wird das nächstfolgende externe Triggersignal als erstes Triggersignal gesetzt, und eine Belichtung aller zur Belichtung vorgesehenen Zeilen der Kamera wird ausgelöst. Die sich anschließenden externen Triggersignale bewirken keine erneute Belichtung der Kamera oder deren Sensor sondern nur die zeilenweise Ausgabe der Bildinformationen der bereits belichteten Zeilen. Demnach stimmt auch die Ausgabe der Bildinformationen mit der einer Einzeilenkamera überein. Eine einfache Integration einer Mehrzeilenkamera in bestehende Anlagen, beispielsweise in Produktionslinien, kann daher erfolgen.

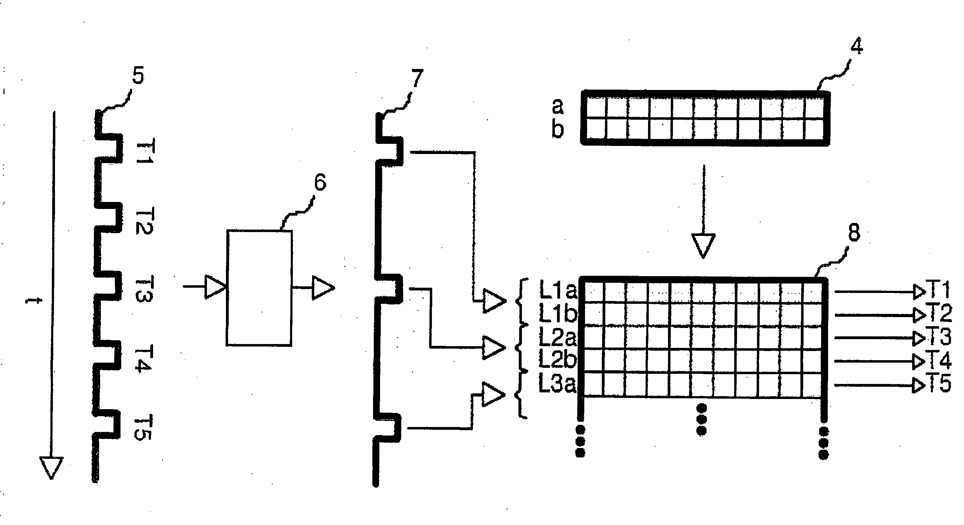

Die Erfindung wird im Folgenden anhand der Zeichnung näher erläutert. Die einzige Figur zeigt schematisch die Steuerung für einen zweizeiligen Sensor gemäß der Erfindung.

In der Zeichnung ist der Signalfluss zur Steuerung einer elektronischen Kamera schematisch dargestellt. Bei dem gezeigten Ausführungsbeispiel werden beispielsweise aufgrund der Bewegung eines Objekts räumlich aufeinander folgende externe Triggersignale T1, T2 ... T5 erzeugt. Diese Triggersignale können beispielsweise vorschubgesteuert sein, wenn sich das abzutastende Objekt bewegt und sich beispielsweise auf einem Fließband befindet. Zu diesen externen Triggersignalen 5 soll jeweils eine Bildzeile aufgenommen werden. Bei gleichförmig bewegten Objekten können auch zeitgesteuerte Triggersignale benutzt werden, die einen zeitlichen Abstand zueinander aufweisen. In der Regel werden die Triggersignale stets so erzeugt, dass jedem Triggersignal ein zeilenförmiger Bereich des abzutastenden Objektes zugeordnet ist, der sich an einem unmittelbar benachbarten zeilenförmigen Bereich, der dem vorherigen Triggersignal zugeordnet ist, anschließt. Somit bilden die zusammengesetzten Bildzeilen das Gesamtbild des Objekts.

Der Bildsensor 4 der elektronischen Kamera ist als Zweizeilensensor mit zwei Zeilen a, b ausgebildet. Die Zeilen a, b verlaufen parallel zueinander und weisen eine Vielzahl von lichtempfindlichen Pixeln auf, von denen in der Zeichnung nur einige dargestellt sind. Die Optik der Kamera ist so ausgebildet und eingestellt, dass jede zu belichtende Zeile a, b einen anderen zeilenförmigen Bereich des aufzunehmenden Objekts erfasst. Die jeweils aufgenommenen Bereiche liegen dabei unmittelbar nebeneinander.

Bei einem einzeiligen Bildsensor wird aufgrund eines externen Triggersignals eine Zeile belichtet, und deren Bildinformationen werden an die Bildverarbeitung ausgegeben. Um zu ermöglichen, dass auch eine Mehrzeilenkamera mit solchen Triggersignalen, wie sie für Einzeilenkameras verwendet werden, angesteuert werden kann, ist eine Steuereinheit 6 vorgesehen, deren Funktionsweise im Folgenden beschrieben wird.

Im Ausgangszustand sind beide Zeilen a, b der Zeilenkamera nicht belichtet. Aufgrund eines ersten externen Triggersignals T1 erfolgt eine Belichtung der beiden Zeilen a, b des Bildsensors 4. Nach der Belichtung werden die Bildinformationen L1a der ersten belichteten Zeile a ausgegeben. Dies ist in der Zeichnung schematisch durch den Pfeil T1 dargestellt. Aufgrund des nachfolgenden externen Triggersignals T2 werden die Bildinformationen L1b der zweiten bereits belichteten Zeile b ausgegeben. Danach sind alle Bildinformationen des Zweizeilen-Bildsensors ausgegeben.

Es kann grundsätzlich vorgesehen werden, dass auch zum Trigger T2 eine Belichtung erfolgt. Die aufgenommenen Informationen werden jedoch verworfen.

Das nächste externe Triggersignal T3 wird durch die Steuereinheit 6 als ein erstes Triggersignal gesetzt, und es erfolgt eine erneute Belichtung beider Bildzeilen a, b des Bildsensors 4. Nach der Belichtung werden aufgrund des Triggersignals T3 die Bildinformationen L2a der ersten erneut belichteten Zeile a ausgegeben. Das folgende externe Triggersignal T4 führt zur Ausgabe der Bildinformationen L2b der zweiten dann bereits belichteten Zeile b.

Das anschließend folgende externe Triggersignal T5 wird wie das Triggersignal T3 und T1 als erstes externes Triggersignal gesetzt und führt zu einer erneuten Belichtung beider Sensorzeilen a, b. Die Ausgabe erfolgt wie bei der vorhergehenden Belichtungsperiode.

Die Steuereinheit 6 bewirkt demnach, dass bei einem Zweizeilensensor mit zwei Sensorzeilen a, b nur jedes zweite externe Triggersignale T1, T3, T5 zu einer Belichtung beider Bildzeilen führt. Die dazwischen liegenden externen Triggersignale T2, T4 steuern die Ausgabe der Bildinformationen der zweiten Bildzeile b. Es werden aus den externen Triggersignalen 5 kameraintern ein neuer Satz Triggersignale 7 erzeugt, deren Abstände zueinander in der Zeitrichtung t oder Bewegungsrichtung des Objekts größer als die der externen Triggersignale sind und die jeweils eine Belichtung beider Bildzeilen auslösen. Die Abstände der erzeugten ersten Triggersignale oder der Triggersignale, die als erste Triggersignale gesetzt werden, beträgt insbesondere einem Vielfachen der Abstände der externen Trigersignale. Das Vielfache entspricht dabei der Anzahl der belichteten Zeilen a, b. Die Steuerung kann dazu einen Zähler umfassen, der ein externes Triggersignal dann als erstes Triggersignal setzt oder ein erstes Triggersignal erzeugt, wenn die Anzahl der externen Triggersignale der Anzahl der zuvor belichteten Zeilen entspricht. Es kann auch ein erstes Triggersignal dann generiert werden, wenn die Bildinformationen aller belichteten Bildzeilen ausgelesen worden sind.

Die Kamera beziehungsweise deren Bildsensor 4 braucht demnach für die Ausgabe von zwei Bildzeilen nur einmal belichtet zu werden. Die zweite Bildzeile b enthält bereits die Bildinformationen, die erst aufgrund des zweiten externen Triggersignals T2, T4 abgerufen werden. Es braucht demnach nur ein einmaliges Auslesen der Informationen der Pixel zu erfolgen, während die Bildinformationen anschließend zeilenweise, beispielsweise aufgrund eines nachfolgenden Triggersignals T2, T4, ausgegeben werden.

Es ist zweckmäßig sicherzustellen, dass die Triggersignale entsprechend der genauen räumlichen Zuordnung von aufzunehmendem Objekt und erzeugter Bildzeile generiert werden. Bei zu großen Abständen der Triggersignale, die bei bewegten Objekten auch einem größeren räumlichen Abstand der aufzunehmenden Zeilen entsprechen, würden die Bildinformationen der bereits aufgenommenen zweiten Bildzeile b nicht mehr zu dem Bild passen, das zum Zeitpunkt des zweiten Triggersignals T2 aufgenommen werden soll. In der Regel ist vorgesehen, dass die Bildinformationen der zweiten Bildzeile b zwischengespeichert werden oder bleiben, bis sie aufgrund des nachfolgenden Triggersignals ausgegeben werden. Bei zu großem Abstand der Triggersignale kann vorgesehen werden, dass die zwischengespeicherten Bildinformationen verworfen werden, um bei einem dann folgenden externen Triggersignal wieder einen aktuellen Bildbereich aufzunehmen.

Der Einsatz der erfindungsgemäßen Steuerung kann demnach vorzugsweise beim Vorliegen von externen Triggersignalen, die einen gleichen räumlichen Abstand zueinander aufweisen, erfolgen derart, dass die abzubildenden Zeilen des Objekts räumlich unmittelbar nebeneinander liegen. Wenn zudem die externen Triggersignale mit einem räumlichen und/oder zeitlichen Abstand zueinander erzeugt werden, durch den bei einem einzeiligen Sensor unmittelbar nebeneinander liegende Zeilen des Objekts abgetastet werden, kann durch den mehrzeiligen Sensor das gleiche Bild aufgenommen werden. Derartige Triggersignale werden in der Regel anwenderseitig erzeugt.

Häufig erfolgt die Generierung der Triggersignale T1, T2 ... T5 in Abhängigkeit von der Position des abzutastenden Objekts relativ zur Kamera. Zum Triggersignal T1 wird eine erste Bildzeile durch die erste Sensorzeile a aufgenommen. Zum Zeitpunkt des zweiten Triggersignals T2 soll eine Zeile des Objekts aufgenommen werden, die zum Zeitpunkt des ersten Triggersignals T1 bereits von der zweiten Sensorzeile b aufgenommen worden ist. Da deren Belichtung bereits zum ersten Triggersignal T1 erfolgt ist, brauchen zum zweiten Triggersignal T2 lediglich die Bilddaten der zweiten Zeile ausgegeben zu werden, ohne dass eine erneute Belichtung erforderlich ist. Entsprechendes gilt für die folgende Belichtungsperiode zu den Triggersignalen T3, T4.

Eine derartige Steuerung ermöglicht den Einsatz von Mehrzeilenkameras anstelle von Einzeilenkameras, ohne eine Veränderung der externen Steuersignale und ohne eine Anpassung der Bildverarbeitungsanlage an die Ausgabe der Kamera. Es wird bewirkt, dass nach einem externen Triggersignal stets die Bildinformationen einer Zeile am Ausgang der Kamera ausgelesen werden können. Dabei ist es unerheblich, wie viele Sensorzeilen der Bildsensor tatsächlich aufweist. Bei einem dreizeiligen Sensor wird nur jedes dritte und bei einem n-zeiligen Sensor jedes n-te externe Triggersignal als erstes Triggersignal gesetzt und zu einer Belichtung der Zeilen führen. Gleichwohl werden nach jedem externen Triggersignal jeweils die Bildinformationen von nur einer Zeile ausgegeben.

Die aufeinander folgenden Bildinformationen werden wie bei einer Einzeilenkamera zeilenweise ausgegeben. Es ergibt sich ein Gesamtbild 8, das sich zusammensetzt aus den einzelnen Bildzeilen L1a, L1b, L2a, L2b ... Zu jedem Triggersignal T1 - T5 werden die Bildinformationen einer Zeile ausgegeben. Die Mehrzeilenkamera verhält sich demnach sowohl von der Ansteuerung durch die Triggersignale als auch von der Ausgabe der Bildinformationen aufgrund der Triggersignale wie eine Einzeilenkamera.

Vorstehend ist die Erfindung anhand einer Kamera mit mehreren Zeilen erläutert worden. Es ist natürlich auch möglich, dass die Steuerung und das Verfahren für eine Kamera verwendet werden, die mehrere Sensoren mit jeweils einer Zeile mit lichtempfindlichen Pixeln aufweist. Wesentlich ist, dass die Erfindung den Einsatz von mehrzeiligen Kameras in solchen Fällen erlaubt, bei denen die extern zur Kamera erzeugten Triggersignale und/oder die externe Bildverarbeitung auf eine Einzeilenkamera abgestimmt sind.

## Patentansprüche

1. Verfahren zum Steuern einer elektronischen Zeilenkamera, die wenigstens zwei Zeilen mit lichtempfindlichen Pixeln aufweist, mittels aufeinanderfolgender externer Triggersignale, **dadurch gekennzeichnet, dass** aufgrund eines ersten Triggersignals eine vorbestimmte Anzahl von Zeilen des Sensors belichtet und die Bildinformationen der ersten belichteten Zeile ausgegeben werden, und dass jeweils aufgrund eines nachfolgenden externen Triggersignals die Bildinformationen jeweils einer nachfolgenden Zeile ausgegeben werden, wobei die nachfolgenden externen Triggersignale gezählt werden und ein externes Triggersignal als ein die Belichtung der Zeilen auslösendes erstes Triggersignal gesetzt wird, wenn die Anzahl der gezählten externen Triggersignale der Anzahl der aufgrund des vorhergegangenen ersten Triggersignals belichteten Zeilen entspricht.

2. Verfahren nach Anspruch 1, **dadurch gekennzeichnet, dass** eine erneute Belichtung der Zeilen nach einer Anzahl von externen Triggersignalen erfolgt, die der Anzahl der nach dem vorhergehenden ersten Triggersignal belichteten Zeilen entspricht.

3. Verfahren nach Anspruch 1 oder 2, **dadurch gekennzeichnet, dass** die Bildinformationen einer belichteten Zeile bis zur Ausgabe aufgrund des der Zeile zugeordneten Triggersignals gespeichert werden oder bleiben.

4. Elektronische Kamera, die wenigstens zwei Zeilen mit lichtempfindlichen Pixeln aufweist, **dadurch gekennzeichnet, dass** eine Steuereinheit (6) vorhanden ist, die aufgrund von aufeinander folgenden externen und zueinander beabstandeten Triggersignale (T1 .. T5) einen Satz erster Triggersignale (T1, T3, T5) erzeugt, durch die eine Belichtung der Zeilen erfolgt und die einen Abstand zueinander aufweisen, der einem Vielfachen des Abstands der externen Triggersignale (T1 .. T5) zueinander entspricht, und dass das Vielfache der Anzahl der zu belichtenden Zeilen (a, b) entspricht, und dass eine Ausgabesteuerung vorhanden ist, die aufgrund des ersten Triggersignals (T1, T3, T5) eine Ausgabe der Bildinformationen der ersten belichteten Zeile (a) des Sensors und jeweils aufgrund eines nachfolgenden externen Triggersignals (T2, T4) eine Ausgabe der Bildinformationen der jeweils nächstfolgenden belichteten Zeile (b) bewirkt.

5. Elektronische Kamera nach Anspruch 4, **dadurch gekennzeichnet, dass** eine Zähleinheit vorhanden ist, die die externen Triggersignale zählt und ein erstes Triggersignal nach einer Anzahl von externen Triggersignalen erzeugt, die der Anzahl der belichteten Zeilen entspricht.

6. Elektronische Kamera nach Anspruch 4 oder 5, **dadurch gekennzeichnet, dass** die Steuerung ein erstes Triggersignal erzeugt, wenn die Bildinformationen aller belichteten Zeilen ausgelesen worden sind oder noch werden.

7. Elektronische Kamera nach einem der Ansprüche 4 bis 6, **dadurch gekennzeichnet, dass** eine Speichereinheit vorhanden ist, die die Bildinformationen der einzelnen Zeilen nach einer Belichtung nach einem ersten Triggersignal bis zur Ausgabe aufgrund des der Zeile zugeordneten Triggersignals speichert.

## Claims

1. A method of controlling an electronic line scan camera, which has at least two lines with light-sensitive pixels, by means of external trigger signals following in succession, **characterized in that** on the basis of a first trigger signal a predetermined number of lines of the sensor are illuminated and the image information of the first illuminated line is issued, and on the basis of a subsequent external trigger signal the image information of a subsequent line is issued in each case, wherein the subsequent external trigger signals are counted and, if the number of the external trigger signals counted corresponds to the number of the lines illuminated on the basis of the preceding first trigger signal, an external trigger signal is set as a first trigger signal which triggers the illumination of the lines.

2. A method according to claim 1, **characterized in that** a renewed illumination of the lines is carried out after a number of external trigger signals which corresponds to the number of the lines illuminated after the preceding first trigger signal.

3. A method according to claim 1 or 2, **characterized in that** the image information of an illuminated line is stored or remains stored until being issued on the basis of the trigger signal allocated to the line.

4. An electronic camera, which has at least two lines with light-sensitive pixels, **characterized in that** a control unit (6) is present which on the basis of external trigger signals (T1 ... T5) following in succession and at an interval from one another produces a set of first trigger signals (T1, T3, T5) by which an illumination of the lines is carried out and which are at an interval from one another which corresponds to a multiple of the interval of the external trigger signals (T1 ... T5) from one another, and the multiple corresponds to the number of the lines (a, b) to be illuminated, and an output control means is present which on the basis of the first trigger signal (T1, T3, T5) causes the image information of the first illuminated line (a) of the sensor to be issued and on the basis of a subsequent external trigger signal (T2, T4) in each case causes the image information of the illuminated line (b) following in each case to be issued.

5. An electronic camera according to claim 4, **characterized in that** a counting unit is present which counts the external trigger signals and produces a first trigger signal after a number of external trigger signals which corresponds to the number of the illuminated lines.

6. An electronic camera according to claim 4 or 5, **characterized in that** the control means produces a first trigger signal if the image information of all the illuminated lines has been or is still being read out.

7. An electronic camera according to any one of claims 4 to 6, **characterized in that** a memory unit is present which stores the image information of the individual lines after an illumination after a first trigger signal until the issue on the basis of the trigger signal allocated to the line.

## Revendications

1. Procédé de commande d'une caméra linéaire électronique qui comporte au moins deux lignes de pixels rendus sensibles à la lumière, au moyen de signaux de déclenchement externes successifs,
**caractérisé en ce que**
suite à un premier signal de déclenchement un nombre prédéterminé de lignes du capteur est éclairé et les informations d'image des premières lignes éclairées sont délivrées, et
respectivement suite à un signal de déclenchement externe suivant, les informations d'image d'une ligne suivante sont respectivement délivrées, les signaux de déclenchement externes successifs étant comptés, et un signal de déclenchement externe étant établi entant que premier signal de déclenchement déclenchant l'éclairement des lignes lorsque le nombre de signaux de déclenchement externes comptés correspond au nombre de lignes éclairées à partir du premier signal de déclenchement précédent.

2. Procédé conforme à la revendication 1,
**caractérisé en ce qu'**
un nouvel éclairement des lignes est effectué après un premier nombre de signaux de déclenchement externes qui correspond au nombre des lignes éclairées après le premier signal de déclenchement précédent.

3. Procédé conforme à la revendication 1 ou 2,
**caractérisé en ce que**
les informations d'image d'une ligne éclairée sont enregistrées ou subsistent jusqu'à leur délivrance suite au signal de déclenchement associé à la ligne.

4. Caméra électronique comportant au moins deux lignes de pixels sensibles à la lumière,
**caractérisé en ce qu'**
il est prévu une unité de commande (6) qui, suite à des signaux de déclenchement (T1...T5) externes successifs et espacés les uns des autres engendre un jeu de premiers signaux de déclenchement (T1, T3, T5) par lesquels est effectué un éclairement des lignes, et qui présentent un espacement les uns par rapport aux autres qui correspond à un multiple de l'espacement des signaux de déclenchement externes (T1...T5) les uns par rapport aux autres, le multiple correspond au nombre de lignes (a, b) à éclairer, et il est prévu une commande de délivrance qui, suite au premier signal de déclenchement (T1, T3, T5) effectue la délivrance des informations d'image de la première ligne (a) éclairée du capteur, et, respectivement suite à un signal de signalisation externe suivant (T2, T4) effectue la délivrance des informations d'image de la ligne (b) éclairée suivante respectives.

5. Caméra électronique conforme à la revendication 4,
**caractérisé en ce qu'**
il est prévu une unité de comptage qui compte les signaux de déclenchement externe et engendre un premier signal de déclenchement après un nombre de signaux de déclenchement externe qui correspond au nombre de lignes éclairées.

6. Caméra électronique conforme à la revendication 4 ou 5,
**caractérisé en ce que**
la commande engendre un premier signal de déclenchement lorsque les informations d'image de toutes de lignes éclairées ont été lues ou demeurent encore.

7. Caméra électronique conforme à l'une des revendications 4 à 6, **caractérisé en ce qu'**
il est prévu une unité de mémoire qui enregistre les informations d'image des différentes lignes après un éclairement après un premier signal de déclenchement jusqu'au déclenchement suite au signal de déclenchement associé à la ligne.
